# EUROPÄISCHE PATENTSCHRIFT

(11) **EP 2 103 469 B1**
(45) Veröffentlichungstag und Bekanntmachung des Hinweises auf die Patenterteilung: **26.09.2012**
(21) Anmeldenummer: 09155482.4
(22) Anmeldetag: 18.03.2009
(51) Int. Cl.: B60J 10/00, B60J 10/08

(54) **Gummielastisches Türdichtungsprofil**
Elastic rubber door seal strip
Profil d'étanchéité de porte en caoutchouc élastique

(30) Priorität: 18.03.2008 DE 202008003774 U
(43) Veröffentlichungstag der Anmeldung: 23.09.2009
(73) Patentinhaber: Gebr. Bode GmbH & Co. KG, 34123 Kassel (DE); GUMMI-WELZ GmbH u. Co. KG GUMMI-KUNSTSTOFFTECHNIK-SCHAUMSTOFFE, 89231 Neu-Ulm (DE)
(72) Erfinder: Grimm, Holger, 36280, Oberaula (DE); Grein, Horst, 34637 Schrecksbach (DE); Fritsche, Wolfgang, 89134 Blaustein (DE); Lindenthal, Gunther, 89176 Asselfingen (DE)
(74) Vertreter: Bauer Vorberg Kayser Patentanwälte

(56) Entgegenhaltungen:
- EP-A- 0 481 863
- DE-U- 1 913 190
- GB-A- 1 511 947
- US-A- 2 813 748
- US-A- 5 209 019

## Beschreibung

Die Erfindung betrifft ein Fahrzeugtürdichtungssystem zur Verwendung an Fahrzeugtürsystemen von Fahrzeugen des öffentlichen Personennahverkehrs, die ein gummielastisches Türdichtungsprofil, mindestens eine Fahrzeugtür und mindestens einen ausfahrbaren Schlebetritt aufweisen.

Ein solches gummielastisches Türdichtungsprofil wird üblicherweise an automatischen Türsystemen wie zum Beispiel Schwenkschiebetüren oder Außenschwingtüren eingesetzt. Die gerade bei Bussen und Bahnen häufig verwendeten Türdichtungsprofile haben die Aufgabe, das Eindringen von Schmutz und Nässe zu verhindern. Wesentlich bei der Konstruktion und Ausführung von Türdichtungsprofilen ist aber auch die Minimierung von als störend empfundenen Windgeräuschen.

Gummielastische Türdichtungsproflle sind aus anderen Anwendungsbereichen bekannt. Beispielsweise beschreibt die US 52 09 019 A ein solches Türdichtungsprofil zum Abdichten von Fahrzeugfenstern. Ein erster Dichtungsbereich dichtet die Tür außen gegen den Türrahmen ab, wenn die Tür in horizontaler Richtung geschlossen wird, ein zweiter Dichtungsbereich dichtet das zu öffnende Türfenster gegen den Türinnenrahmen ab. Ein solches Türdichtungsprofil ist zwar in der Lage, eine Fahrzeugtür sicher nach außen abzudichten, allerdings ist es nur in Zusammenhang mit horizontal schließenden Türen und unabhängig davon vertikal schließenden Fenstern verwendbar.

In Fahrzeugen des öffentlichen Personennahverkehrs werden vermehrt Türsysteme in Kombination mit elektrischen Rampen oder Schlebetritten verwendet. Ein derartiger Schiebetritt dient der Überbrückung von Spalten zwischen dem Fahrzeug und beispielsweise einem Bahnsteig oder einem Bürgersteig. Auch können Schiebetritte zum Ausgleich von Höhenunterschieden eingesetzt werden. Sie sind unmittelbar unterhalb der Fahrzeugtür angeordnet und können bei Bedarf nach vorne ausgefahren werden.

Schiebetritte können als horizontal ausfahrbare und vertikal absenkbare einteilige Bauteile ausgeführt sein, üblicherweise bestehen sie aber aus einer Trittplatte und einer Antrittsleiste als Höhenausgleichselement. Die Trittplatte wird im Wesentlichen In horizontaler Richtung unterhalb der Tür aus dem unteren Fahrzeugbereich ausgefahren, die Antriebsleiste ist Teil des begehbaren Bodens des Fahrzeugs und an ihrer fahrzeugseitigen Seite schwenkbar gelagert. Wird die Trittplatte ausgefahren, senkt sich die Antrittsleiste mit ihrem freien Ende auf die Trittplatte ab und bildet somit eine schräg aufwärts- bzw. -abwärts verlaufende Rampe, die insbesondere auch Rollstuhlfahrern als Einstlegshilfe dient.

Der Schiebetritt ist meist in einem Kasten angeordnet, der mit einer Klappe verschließbar ist. Im eingefahrenen Zustand der Schiebtritte ist die Klappe geschlossen. Wird der Schiebetritt ausgefahren, schwenkt die Klappe nach unten und gibt eine Öffnung zum Ausfahren des Schiebetritts frei. Ist der Schiebetritt aus einer Trittplatte und einer Antriebsleiste gebildet, ist lediglich die Trittplatte innerhalb des Kastens angeordnet, wobei die Antrittsleiste Teil der Oberseite des Kastens ist und sich in den Kasten hinein absenkt, wenn die Klappe geöffnet und die Trittplatte ausgefahren wird.

Bei Fahrzeugen des öffentlichen Personennahverkehrs werden bis heute an der Fahrzeugtürunterseite Türdichtungsprofile verwendet, welche sich in der Regel flächig außen am Türportal dichtend anlegen. In der Regel sind diese Dichtungen derart ausgeführt, das ein Überstand nach unten fahrzeugbedingte Toleranzen ausgleichen kann. Derartige Türdichtungsprofile oder Dichtungen eignen sich insbesondere für Fahrzeugtüren ohne Schiebetritte. Sind Schiebetritte montiert, werden jedoch oftmals die gleichen Türdichtungsprofile eingesetzt und stören in vielerlei Hinsicht. Gerade bei der Verwendung des Kastens ist ein sich an die Außenwand des Fahrzeugs anschmiegendes Türdichtungsprofil dann besonders nachteilig, wenn sich das Türdichtungsprofil oder Elemente davon an die Klappe selbst anschmiegen. Da das Türdichtungsprofil an der Tür befestigt ist, kann die Klappe nicht geöffnet werden, ohne dass die Fahrzeugtür zuvor von der Klappe weg bewegt wird. Umgekehrt kann die Klappe nicht schließen, wenn die Fahrzeugtür geschlossen und sich das Türdichtungsprofil vor die Öffnung des Kastens erstreckt. Der Schiebetritt stößt beim Aus- und Einfahren an dem Türdichtungsprofil an, verformt dieses oder klemmt es sogar ein. Hierdurch wird das Türdichtungsprofll beschädigt, die Klappe kann nicht geschlossen werden, es kann zu Undichtigkeiten im Fahrverkehr und zu einer erhöhten Geräuschentwicklung kommen.

Teilweise werden derartige Türdichtungsprofile von den Betreibern solcher Fahrzeuge deshalb nachträglich beschnitten, um ein problemloses Aus- und Einfahren des Schiebetritts zu gewährleisten. Durch das Beschneiden der Türdichtungsprofile ist die Dichtigkeit der Tür im unteren Bereich nicht mehr gewährleistet, auch ist der Toleranzbereich, welche die Türdichtungsprofile ursprünglich kompensieren konnten, massiv eingeschränkt.

Die Aufgabe der vorliegenden Erfindung besteht darin, ein Fahrzeugtürdichtungssystem zur Verwendung an Fahrzeugtüren zu schaffen, das für eine Verwendung an einer Fahrzeugtür mit einem darunter angeordneten Schiebetritt geeignet ist. Dabei soll gewährleistet sein, das der Schiebetritt zeitlich vor dem Öffnen und zeitlich nach dem Schließen der Fahrzeugtür ein- bzw. ausgefahren werden kann, ohne dass das Türdichtungsprofil stört und beeinträchtigt wird. Ein Toleranzausgleich der kombinierten Baugruppen wie Türsystem, Schiebetritt und Portal soll dabei ebenfalls gewährleistet sein. Insbesondere soll sich das Türdichtungsprofil auch für eine Verwendung mit einem Höhenausgleichselement eignen.

Erfindungsgemäß wird die Aufgabe durch Fahrzeugtürdichtungssystem zur Verwendung an Fahrzeugen des öffentlichen Personennahverkehrs, mit
- einem gummielastischen Türdichtungsprofil (10),
- mindestens einer Fahrzeugtür (12) und
- mindestens einem ausfahrbaren Schiebetritt,
wobei sich die Fahrzeugtür (12) bei Öffnungs- und Schließvorgängen im Wesentlichen in horizontaler Richtung und der Schiebetritt auch in vertikaler Richtung auf das Türdichtungsprofil (10) hin und von diesem weg bewegt, und das Türdichtungsprofil (10) an einer dem Schlebetritt zugewandten Unterkante der Fahrzeugtür (12) angeordnet ist, und
- das Türdichtungsprofil (10) im geschlossenen Zustand der Fahrzeugtür (12) im Wesentlichen zwischen der Unterkante der Fahrzeugtür (12) und dem Schiebetritt angeordnet ist,
- ein erster Dichtungsbereich (26) des Türdichtungsprofils (10) im geschlossenen Zustand der Fahrzeugtür (12) eine der Unterseite der Fahrzeugtür (12) zugewandte erste Dichtungsfläche(28) des Schlebetritts abdichtet,
- ein zweiter Dichtungsbereich (30) im geschlossenen Zustand der Fahrzeugtür (12) gegen eine in Türöffnungsrichtung weisende kopfseitige zweite Dichtungsfläche (32) des Schiebetritts abdichtet,
- der Schlebetritt aus einer Trittplatte (18) und einer Antrittsleiste (14) gebildet ist, bei dem
   - die Trittplatte (18) im Wesentlichen in horizontaler Richtung aus-und einfahrbar ist,
   - die Antrittsleiste (14) im Bereich der Türöffnung verbleibt,
   - die Antrittsleiste (14) in vertikaler Richtung schwenkbar gelagert ist und sich auf die begehbare Trittplatte (18) absenkt, wenn diese ausgefahren ist,
   - die Antrittsleiste (14) die erste Dichtungsfläche (28) und die zweite Dichtungsfläche (32) aufweist und mit diesen im geschlossenen Zustand der Fahrzeugtür (12) an dem Türdichtungsprofil (10) anliegt.

In der nachfolgenden Beschreibung und auch in den Unteransprüchen sind weitere vorteilhafte Ausführungsvarianten der Erfindung beschrieben.

Die Erfinderin hat erkannt, dass ein Türdichtungsprofil für den beschriebenen Anwendungsfall nur dann die gewünschten Anforderungen erfüllt, wenn es sowohl vertikale als auch horizontale Bewegungen der einzelnen Komponenten berücksichtigt. Insbesondere wird eine hohe Dichtewirkung dadurch erreicht, dass der erste Dichtungsbereichgegen die Unterkante der Fahrzeugtür abdichtet während der zweite Dichtungsbereich an der kopfseitigen Dichtungsfläche des Schiebetritts anliegt. Dabei können die beiden Dichtungsbereiche getrennt voneinander ausgeführt sein, sie können aber auch ineinander übergehen, das Türdichtungsprofil also auch zwischen den beiden Dichtungsbereichen am Schiebetritt anliegen.

Das erfindungsgemäße Fahrzeugtürdichtungssystem eignet sich insbesondere für Schiebetritte, die aus einer Trittplatte und einer Antrittsleiste zum Höhenausgleich gebildet sind. Insbesondere ist auch eine Klappe eines Kastens, der den Schiebetritt oder die Trittplatte beinhaltet, problemlos nutzbar, da sie durch das erfindungsgemäße Türdichtungsprofil nicht beeinträchtigt wird.

Ein erstes erfindungsgemäßes Türdichtungsprofil weist einen ersten Dichtungsbereich mit einer kreissegmentförmigen Außenkontur auf, der in Richtung des Schiebetritts bzw. Antrittsleiste angeordnet ist und sich im Wesentlichen unterhalb der Fahrzeugtürunterseite befindet. Der zweite Dichtungsbereich ist durch eine sich parallel zur Außenfläche des Fahrzeugs erstreckende Dichtlippe gebildet, die von außen gegen den Schiebetritt bzw. die Antrittsleiste abdichtet. Die Dichtlippe steht also, von der Fahrzeugtür nach unten gesehen vor, wobei der Überstand derart gewählt ist, dass die Dichtlippe eine Klappe, die einen Kasten des Schiebetritts oder der Trittplatte verschließt, nicht kontaktiert und somit beim Öffnen oder Schließen nicht behindert. Die kreissegmentförmige Außenkontur des ersten Dichtungsbereichs erlaubt ein problemloses Öffnen und Schließen der Fahrzeugtür auch bei nicht ausgefahrener Trittplatte und nicht abgesenkter Antrittsleiste, da der erste Dichtungsbereich leicht über die Oberfläche des Bodens gleiten kann. Beim Schließen der Tür trifft der erste Dichtungsbereich auf die Antrittsleiste und wird auf diesem in Richtung des Fahrzeuginnern bewegt. In der Endposition der Tür kommt dann der zweite Dichtungsbereich außen an der Antrittsleiste (oder dem Schlebetritt) zur Anlage. Wird der Schiebetritt ausgefahren, kann dies problemlos vor dem Öffnen der Fahrzeugtür erfolgen, da sich die Klappe ungehindert öffnen kann. Die Trittplatte kann ausgefahren werden, wäh-rend sich die Antrittsleiste ggfs. absenkt.

Der erste Dichtungsbereich kann als austauschbares Element des Türdichtungsprofils ausgeführt sein.

In einer besonders vorteilhaften Ausführungsvariante weist das beschriebene Türdichtungsprofil eine spezielle Verrippung innerhalb des Türdichtungsprofils auf, die bewirkt, dass die äußere Dichtlippe bei Verformung des Türdichtungsprofils in Richtung der Fahrzeugaußenhaut bzw. des Schiebetritts gezogen wird und mit Vorspannung an der zweiten Dichtungsfläche anliegt. Die Verrippung gewährleistet weiterhin eine Formstabilität im be- und entlasteten Zustand. Die gewünschte Verformung wird dabei durch zwei Elemente bewirkt, nämlich ein Druckelement, das mit dem ersten Dichtungsbereich in Kontakt steht und einem Zugelement, das sich im Querschnitt gesehen diagonal von der Dichtlippe zur Fahrzeugtürunterseite erstreckt. Bei Kontakt des ersten Dichtungsbereichs mit der Antrittsleiste wird dieser Bereich und damit auch das Druckelement in Richtung der Fahrzeugtürunterseite verformt und bewegt, kommt mit dem Zugelement in Kontakt und verformt dieses. Durch die Verformung des Zugelements wird die Dichtlippe in Richtung der Fahrzeugaußenhaut und damit in Richtung der zweiten Dichtungsfläche bewegt.

Eine zweite erfindungsgemäße Ausführungsvariante des Türdichtungsprofils sieht eine unmittelbare Verbindung des ersten und des zweiten Dichtungsbereichs vor. Ein im Querschnitt ovalförmiges Dichtungselement ist derart unterhalb der Fahrzeugtürunterseite angeordnet, dass es sich im geschlossenen Zustand der Fahrzeugtür und bei eingefahrenem Schiebetritt bereichsweise sowohl an der ersten, der Fahrzeugtürunterseite zugewandten Dichtungsfläche der Antrittsleiste als auch der freien, nach außen weisenden kopfseitigen Dichtungsfläche der Antritts-leiste anschmiegt. Das ovalförmige Dichtungselement legt sich sozusagen um die obere freie Kante der Antrittsleiste, wobei lediglich das ovalförmige Dichtungselement verformt wird.

Das ovalförmige Dichtungselement kann sowohl hohl als auch aus einem Vollmaterial gefertigt werden. Wesentlich ist, dass es eine ausreichende Elastizität aufweist, die ein Anschmiegen bzw. Zurückdrücken des Materials an die Antrittsleiste gewährleistet.

Vorteilhafterweise kann zusätzlich eine äußere Sichtlippe nach Art der Dichtlippe der ersten Ausführungsvariante vorgesehen sein, die jedoch keine Dichtwirkung aufweist, sondern lediglich als Sichtblende dient. Auf der ins Fahrzeuginnere weisenden Seite des Türdichtungsprofils kann eine Schmutzkante vorgesehen sein, die in Richtung des Fahrzeugbodens oder der Antrittsleiste weist. Beim Schließen der Tür schiebt diese Fremdkörper, wie zum Beispiel Schmutz, Stelnehen, Schneematsch usw. vor dem Türkörper aus dem Bereich der ersten Dichtfläche heraus. Eine derartige Schmutzkante eignet sich erfindungsgemäß auch für eine Verwendung mit der ersten beschriebenen Ausführungsvariante der Erfindung und kann als austauschbares Element ausgebildet sein.

Im Folgenden wird die Erfindung anhand der Figuren näher erläutert, die lediglich dem Verständnis der Erfindung dienen sollen und den Schutzbereich nicht auf die beschriebenen Ausführungsbeispiele beschränken sollen. Es zeigen
- Fig. 1:: ein Türdichtungsprofil nach dem Stand der Technik,
- Fig. 2:: ein erstes erflndungsgemäßes Türdichtungsprofil im Schnitt und bei geschlossener Fahrzeugtür und eingefahrenem Schiebetritt,
- Fig. 3:: das Türdichtungsprofil aus Figur 1 bei geschlossener Fahrzeugtür und ausgefahrenem Schiebetritt,
- Fig. 4:: eine zweite Ausführungsvariante des erfindungsgemäßen Türdichtungsprofils im Schnitt bei geschlossener Fahrzeugtür und eingefahrenem Schiebetritt,
- Fig. 5:: das Türdichtungsprofil aus Figur 4 bei geschlossener Fahrzeugtür und ausgefahrenem Schiebetritt,

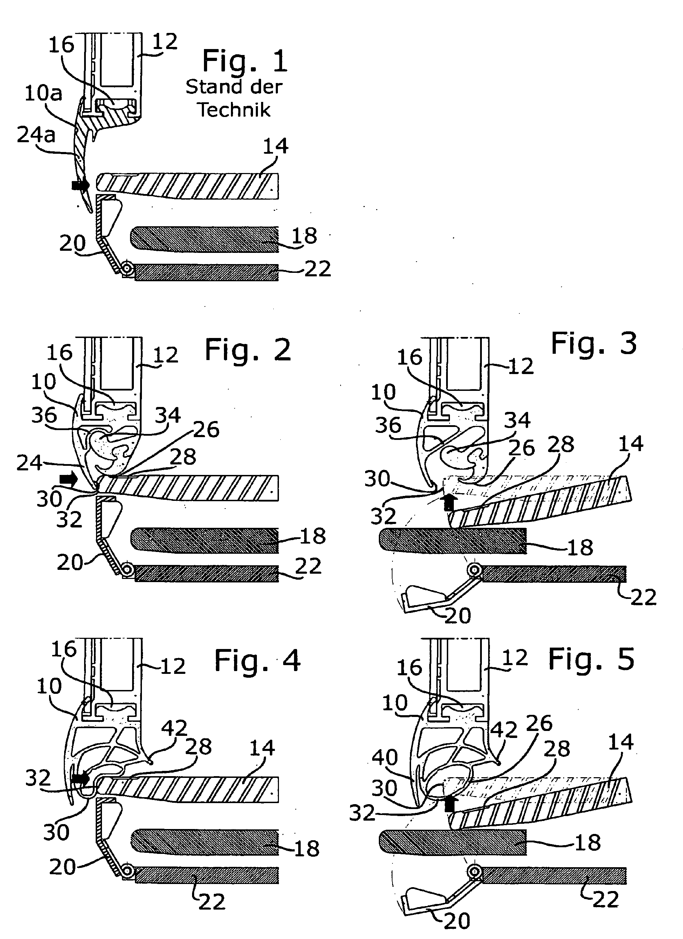

Figur 1 zeigt ein Türdichtungsprofil 10a nach dem Stand der Technik, die Figuren 2 bis 5 jeweils erfindungsgemäße Türdichtungsprofile 10 im Querschnitt. In allen Figuren ist das Türdichtungsprofil 10, 10a an einer Unterseite einer Fahrzeugtür 12 befestigt, die einem nicht gezeigten Fahrzeugboden des Fahrzeugs zugewandt ist. Im vorliegenden Fall ist eine Antrittsleiste 14 erkennbar, die den Fahrzeugboden im Bereich der Fahrzeugtür 12 ausbildet. Das Türdichtungsprofil 10, 10a kann beliebig an der Fahrzeugtür 12 befestigt sein, im gezeigten Ausführungsbeispiel ist es in eine Nut 16 eingeschoben.

Unterhalb der Antrittsleiste 14 ist eine Trittplatte 18 angeordnet, die sich im Wesentlichen parallel zum Fahrzeugboden erstreckt. Eine Klappe 20 verschließt einen Kasten 22 in dem die Trittplatte 18 gelagert ist. Dabei muss es sich nicht notwendiger Weise um einen geschlossenen Kasten 22 handeln, denkbar ist auch, das lediglich ein Unterbodenschutz für die Trittplatte 18 vorgesehen ist. Ein Kasten 22 ist aber insofern vorteilhaft, well in ihm die elektrischen und mechanischen Bauteile der Trittplatte 18 besser geschützt sind.

Die Trittplatte 18 und die Antrittsleiste 14 bilden gemeinsam einen Schiebetritt aus, in einer einfacheren Ausführungsvariante kann dieser lediglich durch eine Platte gebildet sein, die in Öffnungsrichtung der Tür ausgefahren und sich heben und senken kann. Die Ausführung mit Antriebsleiste 14 hat jedoch den Vorteil, dass beispielsweise Rollstuhlfahrer über die Antriebsleiste 14 den Eintrittsbereich des Fahrzeugs problemloser passieren können. Wird die Trittplatte 18 ausgefahren, senkt sich die Antrittsleiste 14 ab und bildet eine schräg verlaufende Fläche (vergleiche Figur 3 und 5).

Die Klappe 20 ist schwenkbar an einer Unterseite des Kastens 22 angelenkt und lässt sich in Richtung eines nicht gezeigten Untergrundes umklappen bzw. öffnen.

Figur 1 verdeutlicht den Nachteil des Stands der Technik, nämlich dass das Türdichtungsprofil 10a ein Öffnen der Klappe verhindert, solange die Fahrzeugtür 12 geschlossen ist. Das Türdichtungsprofil 10a weist nämlich eine Dichtlippe 24a auf, die sich ausgehend von der Fahrzeugtür 12 bis vor die Klappe 20 erstreckt. Deutlich wird auch, dass sich die Klappe 20 nur schließen lässt, solange die Fahrzeugtür 12 geöffnet ist. Sollte die Fahrzeugtür 12 bereits geschlossen sein, stößt die Klappe 20 beim Schließen gegen die Dichtlippe 24 und klemmt diese ein.

Die Figuren 2 und 3 verdeutlichen die Funktionsweise einer ersten Ausführungsvariante des erfindungsgemäßen Türdichtungsprofils 10. Bei diesem dichtet ein erster Dichtungsbereich 26 gegen eine der Unterseite der Fahrzeugtür 12 zugewandte ersten Dichtungsfläche 28 der Antrittsleiste 14 ab, während ein zweiter Dichtungsbereich 30 des Türdichtungsprofils 10 gegen eine in Öffnungsrichtung der Fahrzeugtür 12 weisende zweite Dichtungsfläche 32 der Antrittsleiste 14 abdichtet. In Figur 3 ist erkennbar, dass die erste Dichtungsfläche 28 als Vertiefung ausgeführt sein kann.

Das Türdichtungsprofil 10 gemäß der ersten Ausführungsvariante weist ein Druckelement 34 auf, das im geschlossenen Zustand der Fahrzeugtür 12 gegen ein Zugelement 36 drückt, wodurch die Dichtlippe 24 gegen die zweite Dichtungsfläche 32 gezogen wird. Das Zugelement 36 verläuft ausgehend von der Dichtlippe 24 diagonal in Richtung der Unterseite der Fahrzeugtür 12, das Druckelement 34 befindet sich zwischen dem Zugelement 36 und dem ersten Dichtungsbereich 26 und wird bei Druck auf den ersten Dichtungsbereich 26 in etwa in Richtung der Unterseite der Fahrzeugtür 12 und somit in Richtung des Zugelements 36 bewegt und verformt dieses. Durch die Verformung wird die Dichtlippe 24 gegen die zweite Dichtungsfläche 32 gezogen.

Die zweite Ausführungsvariante der Erfindung Ist in den Figuren 4 und 5 dargestellt, gleiche Bauteile und Elemente sind mit den gleichen Bezugsziffern versehen. Der wesentliche Unterschied zur ersten Ausführungsvariante besteht darin, dass der erste Dichtungsbereich 26 und der zweite Dichtungsbereich 30 durch ein ovalförmiges Dichtungselement 38 gebildet sind. Das Dichtungselement 38 legt sich im geschlossenen Zustand der Fahrzeugtür 12 und im eingefahren Zustand der Trittplatte 18 auf die der Fahrzeugtür 12 zugewandte Kante der Antrittsteiste 14 und dichtet gleichzeitig die erste Dichtungsfläche und die zweite Dichtungsfläche 30 ab.

Weiterhin weist das Türdichtungsprofil 10 eine Sichtlippe 40 auf, die sich auf der Fahrzeugaußenseite ausgehend von der Fahrzeugtür 12 aus vor die Antrittsleiste 14 erstreckt.

Im Fahrzeuginnern ist eine Schmutzkante 42 vorgesehen, die dem Fahrzeugboden bzw. im gezeigten Ausführungsbeispiel der Antrittsleiste 14 zugewandt ist und Verunreinigungen beim Schließen der Fahrzeugtür 12 vor dem Türkörper aus dem Bereich der zweiten Dichtungsfläche 32 herausschiebt. Das Türdlchtungsprofil 10 der zweiten Ausführungsvariante ist derart ausgeführt, dass eine Verformung lediglich das ovale Dichtungselement 38 betrifft.

Je nach Ausführungsform und Elastizität des ovalen Dichtungselement 38 können die beiden Dichtungsbereiche 26, 30 auch relativ klein ausfallen, da das Dichtungselement 38 dann in erster Linie auf der Kante der Antrittsleiste 14 aufsetzt. Trotz allem dichtet das Türdichtungsprofil 10 auch dann sowohl in vertikaler als auch in horizontaler Richtung ab.

Bei beiden Ausführungsvarianten der Erfindung bewegt sich die Antrittsleiste 14 nach unten, wenn die Klappe 20 geöffnet und die Trittplatte 18 ausgefahren wird. Die Dichtungswirkung des Türdichtungsprofils 10 wird dabei aufgehoben. Die Trittplatte 18 fährt unterhalb des Türdichtungsprofils 10 bei geschlossener Fahrzeugtür 12 aus, sie wird erst bei vollständig ausgefahrener Trittplatte 18 geöffnet. Das Schließen der Fahrzeugtür 12 geschieht in umgekehrter Reihenfolge, die Fahrzeugtür 12 wird geschlossen und die Trittplatte 18 anschließend eingefahren. Im letzten Moment vor dem kompletten Einfahren der Trittplatte 18 hebt sich die Antrittsleiste 14 und dichtet von unten gegen das Türdichtungsprofil 10 ab.

Bei der ersten Ausführungsvariante dichtet beim Schließvorgang zunächst die erste Dichtungsfläche 28 gegen den ersten Dichtungsbereich 26 und dann die zweite Dichtungsfläche 32 gegen den zweiten Dichtungsbereich 30, wohingegen bei der zweiten Ausführungsvariante beide Dichtungsbereiche 26, 30 zeitgleich aktiviert werden.

## Patentansprüche

1. Fahrzeugtürdichtungssystem zur Verwendung an Fahrzeugen des öffentlichen Personennahverkehrs, mit
- einem gummielastischen Türdichtungsprofil (10),
- mindestens einer Fahrzeugtür (12) und
- mindestens einem ausfahrbaren Schiebetritt,
wobei sich die Fahrzeugtür (12) bei Öffnungs- und Schließvorgängen im Wesentlichen in horizontaler Richtung und der Schiebetritt auch in vertikaler Richtung auf das Türdichtungsprofil (10) hin und von diesem weg bewegt, und das Türdichtungsprofil (10) an einer dem Schiebetritt zugewandten Unterkante der Fahrzeugtür (12) angeordnet ist,
- das Türdichtungsprofil (10) im geschlossenen Zustand der Fahrzeugtür (12) im Wesentlichen zwischen der Unterkante der Fahrzeugtür (12) und dem Schiebetritt angeordnet ist,
- ein erster Dichtungsbereich (26) des Türdichtungsprofils (10) im geschlossenen Zustand der Fahrzeugtür (12) eine der Unterseite der Fahrzeugtür (12) zugewandte erste Dichtungsfläche (28) des Schiebetritts abdichtet,
- ein zweiter Dichtungsbereich (30) im geschlossenen Zustand der Fahrzeugtür (12) gegen eine in Türöffnungsrichtung weisende kopfseitige zweite Dichtungsfläche (32) des Schiebetritts abdichtet,
- der Schiebetritt aus einer Trittplatte (18) und einer Antrittsleiste (14) gebildet ist, bei dem
- die Trittplatte (18) im Wesentlichen in horizontaler Richtung aus-und einfahrbar ist,
- die Antrittsleiste (14) im Bereich der Türöffnung verbleibt,
- die Antrittsleiste (14) in vertikaler Richtung schwenkbar gelagert ist und sich auf die begehbare Trittplatte (18) absenkt, wenn diese ausgefahren ist,
- die Antrittsleiste (14) die erste Dichtungsfläche (28) und die zweite Dichtungsfläche (32) aufweist und mit diesen im geschlossenen Zustand der Fahrzeugtür (12) an dem Türdichtungsprofil (10) anliegt.

2. Fahrzeugtürdichtungssystem nach Anspruch 1, **dadurch gekennzeichnet, dass** die Trittplatte (18) in einem Kasten (22) angeordnet ist, der mit einer Klappe (20) verschließbar ist.

3. Fahrzeugtürdichtungssystem nach Anspruch 1 oder 2, **dadurch gekennzeichnet, dass** das Türdichtungsprofil (10) aufweist
- ein Druckelement (34), das mit dem ersten Dichtungsbereich (26) verbunden ist, und
- ein Zugelement (36), das mit dem zweiten Dichtungsbereich (30) verbunden ist
- wobei das Zugelement (36) derart angeordnet ist, dass im geschlossenen Zustand der Fahrzeugtür (12) und eingefahrenem Schiebetritt das Druckelement (34) gegen das Zugelement (36) gedrückt ist und dieses den zweiten Dichtungsbereich (30) gegen die zweite Dichtungsfläche (32) zieht.

4. Fahrzeugtürdichtungssystem nach Anspruch 3, **dadurch gekennzeichnet, dass** der erste Dichtungsbereich (26) durch ein Element mit krelsbogenförmiger Außenkontur gebildet ist.

5. Fahrzeugtürdichtungssystem nach Anspruch 1 oder Anspruch 2, **dadurch gekennzeichnet, dass** ein ovalförmiges Dichtungselement (38) vorgesehen ist, das sich im geschlossenen Zustand der Fahrzeugtür (12) und bei eingefahrener Trittplatte (18) an eine vordere freie Kante der Antrittsleiste (14) anliegt und somit den ersten Dichtungsbereich (26) und den zweiten Dichtungsbereich (30) ausbildet.

6. Fahrzeugtürdichtungssystem nach Anspruch 5, **dadurch gekennzeichnet, dass** weiterhin eine Sichtlippe (40) auf der Außenseite des Fahrzeugs vorgesehen ist und sich in Richtung Untergrund bis vor die Antrittsleiste (14) erstreckt.

7. Fahrzeugtürdichtungssystem nach Anspruch 5 oder Anspruch 7, **dadurch gekennzeichnet, dass** eine ins Fahrzeuginnere weisende Schmutzkante (42) zum Entfernen von Verunreinigungen im Bereich vor der ersten Dichtungsfläche (28) vorgesehen ist.

## Claims

1. Vehicle door sealing system for use in public transport vehicles, comprising
- a rubber-elastic door sealing profile (10),
- at least one vehicle door (12) and
- at least one extendable sliding step,
wherein the vehicle door (12) substantially moves in the horizontal direction and the sliding step also In the vertical direction towards the door sealing profile (10) and away from it during opening and closing processes, and the door sealing profile (10) is disposed on a lower edge of the vehicle door (12) which faces towards the sliding step,
- the door sealing profile (10) Is substantially disposed between the lower edge of the vehicle door (12) and the sliding step in the closed state of the vehicle door (12),
- a first sealing area (26) of the door sealing profile (10), In the closed state of the vehicle door (12), seals a first sealing surface (28) of the sliding step which faces towards the underside of the vehicle door (12),
- a second sealing area (30), In the closed state of the vehicle door (12), seals against a head-end second sealing surface (32) of the sliding step which points In the door opening direction,
- the sliding step is formed from a tread panel (18) and a stepping strip (14), in which
- the tread panel (18) Is extendable and retractable substantially in the horizontal direction,
- the stepping strip (14) remains In the area of the door opening,
- the stepping strip (14) Is mounted so as to be pivotable in the vertical direction and lowers onto the step-on tread panel (18) when the latter Is extended,
- the stepping strip (14) comprises the first sealing surface (28) and the second sealing surface (32) and with them rests against the door sealing profile (10) in the closed state of the vehicle door (12).

2. Vehicle door sealing system according to claim 1, **characterised In that** the tread panel (18) is disposed in a case (22) that can be closed with a lid (20).

3. Vehicle door sealing system according to claim 1 or 2, **characterised in that** the door sealing profile (10) comprises:
- a pushing member (34) connected to the first sealing area (26), and
- a pulling member (36) connected to the second sealing area (30),
- wherein the pulling member (36) is arranged in such a way that, in the closed state of the vehicle door (12) and when the sliding step Is retracted, the pushing member (34) is pushed against the pulling member (36) and the latter pulls the second sealing area (30) against the second sealing area (32).

4. Vehicle door sealing system according to claim 3, **characterised In that** the first sealing area (26) is formed by an element with a circular arc-shaped outer contour.

5. Vehicle door sealing system according to claim 1 or claim 2, **characterised in that** an oval-shaped sealing member (38) is provided which, in the closed state of the vehicle door (12) and when the sliding step (18) is retracted, abuts against a front free edge of the stepping strip (14) and thus forms the first sealing area (26) and the second sealing area (30).

6. Vehicle door sealing system according to claim 5, **characterised in that**, furthermore, a screening lip (40) Is provided on the outside of the vehicle and extends in the direction of the underlying ground to in front of the stepping strip (14).

7. Vehicle door sealing system according to claim 5 or claim 7, **characterised in that** dirt-removing edge (42), which points towards the interior of the vehicle, Is provided for removing dirt in the area in front of the first sealing surface (28).

## Revendications

1. Système d'étanchéité de porte de véhicule, destiné à être utilisé sur des véhicules du transport en commun urbain, comprenant
- un profil d'étanchéité de porte (10) élastique comme du caoutchouc,
- au moins une porte de véhicule (12) et
- au moins un marchepied coulissant apte à être sorti,
durant les manoeuvres d'ouverture et de fermeture, ladite porte de véhicule (12) se déplaçant pour l'essentiel dans la direction horizontale et ledit marchepied coulissant aussi dans la direction verticale vers ledit profil d'étanchéité de porte (10) et dans la direction opposée à celui-ci, et ledit profil d'étanchéité de porte (10) étant disposé sur un bord inférieur de la porte de véhicule (12), qui montre en direction du marchepied coulissant,
- en état fermé de la porte de véhicule (12), le profil d'étanchéité de porte (10), étant disposé pour l'essentiel entre le bord Inférieur de la porte de véhicule (12) et le marchepied coulissant,
- en état fermé de la porte de véhicule (12), une première zone d'étanchéité (26) du profil d'étanchéité de porte (10) étanchant une première surface d'étanchéité (28) du marchepied coulissant, qui montre en direction de la face inférieure de la porte de véhicule (12),
- en état fermé de la porte de véhicule (12), une seconde zone d'étanchéité (30) étanchant contre une seconde surface d'étanchéité (32) du marchepied coulissant, située en tête et montrant dans la direction d'ouverture de la porte,
- ledit marchepied coulissant étant constitué par une plaque de marchepied (18) et par une baguette d'entrée (14), dans lequel
- ladite plaque de marchepied (18) est apte à être sortie et rentrée pour l'essentiel dans la direction horizontale,
- ladite baguette d'entrée (14) reste au niveau de la baie de la porte,
- ladite baguette d'entrée (14) est logée à pivotement dans la direction verticale et s'abaisse sur ladite plaque de marchepied praticable (18) lorsque celle-ci est sortie,
- ladite baguette d'entrée (14) présente lesdites première surface d'étanchéité (28) et seconde surface d'étanchéité (32) et s'appuie par celles-ci, en état fermé de la porte de véhicule (12), sur ledit profil d'étanchéité de porte (10).

2. Système d'étanchéité de porte de véhicule selon la revendication 1, **caractérisé par le fait que** ladite plaque de marchepied (18) est disposée dans une caisse (22) qui peut être fermée par un clapet (20).

3. Système d'étanchéité de porte de véhicule selon la revendication 1 ou 2, **caractérisé par le fait que** ledit profil d'étanchéité de porte (10) comprend
- un élément de pression (34) qui est relié à ladite première zone d'étanchéité (26) et
- un élément de traction (36) qui est relié à ladite seconde zone d'étanchéité (30),
- ledit élément de traction (36) étant disposé de telle manière que, en état fermé de la porte de véhicule (12) et lorsque ledit marchepied coulissant est rentré, ledit élément de pression (34) est plaqué contre ledit élément de traction (36) et que ce dernier tire la seconde zone d'étanchéité (30) contre la seconde surface d'étanchéité (32).

4. Système d'étanchéité de porte de véhicule selon la revendication 3, **caractérisé par le fait que** ladite première zone d'étanchéité (26) est formée par un élément ayant un contour extérieur en arc de cercle.

5. Système d'étanchéité de porte de véhicule selon la revendication 1 ou la revendication 2, **caractérisé par le fait qu'**un élément d'étanchéité (38) ovale est prévu qui, en état fermé de la porte de véhicule (12) et lorsque ladite plaque de marchepied (18) est rentrée, s'appuie contre un bord avant libre de la baguette d'entrée (14) et forme ainsi ladite première zone d'étanchéité (26) et ladite seconde zone d'étanchéité (30).

6. Système d'étanchéité de porte de véhicule selon la revendication 5, **caractérisé par le fait que** l'on prévoit en outre une lèvre pare-vue (40) sur la face extérieure du véhicule, qui s'étend vers le bas jusque devant ladite baguette d'entrée (14).

7. Système d'étanchéité de porte de véhicule selon la revendication 5 ou la revendication 6, **caractérisé par le fait que** l'on prévoit une arête à décrasser (42) montrant vers l'intérieur du véhicule et destinée à enlever les impuretés dans la zone située devant ladite première surface d'étanchéité (28).
